# FASCICULE DE BREVET EUROPEEN

(11) **EP 0 655 543 B1**
(45) Date de publication et mention de la délivrance du brevet: **02.07.1997**
(21) Numéro de dépôt: 94402709.3
(22) Date de dépôt: 25.11.1994
(51) Int. Cl.: E06B 3/54

(54) **Liaison mécanique entre un élément vitré et une structure**
Mechanische Verbindung zwischen einer Glasscheibe und einer Tragestruktur
Mechanical joint between a window panel and a structure

(30) Priorité: 30.11.1993 FR 9314338
(43) Date de publication de la demande: 31.05.1995
(73) Titulaire: SAINT-GOBAIN VITRAGE, 92400 Courbevoie (FR)
(72) Inventeur: Demars, Yves, F-60600 Clermont (FR); Poix, René, F-60400 Noyon (FR)
(74) Mandataire: Renous Chan, Véronique

(56) Documents cités:
- EP-A- 0 201 212
- EP-A- 0 506 522
- US-A- 4 666 330

## Description

L'invention concerne les systèmes de liaison mécanique permettant de fixer des plaques, notamment des éléments vitrés, à une structure porteuse.

Elle s'intéresse plus particulièrement à la fixation d'éléments vitrés sur une structure porteuse par une technique consistant à fixer lesdits éléments non par leur pourtour à l'aide d'un cadre périphérique mais par des points d'accrochage mécanique situés usuellement à chacun de leurs coins.

Ces éléments vitrés ainsi fixés sont connus sous le terme de V.E.A (Vitrages Extérieurs Accrochés) ou encore parfois désignés sous le terme anglais "structural glazing".

Ce type de montage, très discret, permet ainsi d'obtenir des façades de bâtiment entièrement constituées d'éléments vitrés, les uns transparents pour jouer le rôle de vitrages-vision, les autres opaques, faisant en général fonction d'allèges. De telles façades présentent un minimum de discontinuité de surface vues de l'extérieur.

Cependant, la recherche de l'esthétisme ne doit pas se faire au détriment de la fiabilité de la fixation, et la conception de ces liaisons par points doit prendre en compte différentes exigences du point de vue mécanique. Ainsi, ces liaisons doivent bien sûr garantir une fixation transversale entre l'élément vitré et la structure porteuse qui soit solide et efficace et, en particulier, supporter sans risque de casse le poids de l'élément vitré. Mais par ailleurs, l'élément vitré, une fois posé, doit être capable de "répondre" sans se rompre à des sollicitations de diverses natures, et tout particulièrement à des contraintes, qui vont avoir tendance à le fléchir, crées par des conditions atmosphériques du type vents. Les liaisons ont donc à autoriser un fléchissement de quelques degrés de l'élément vitré.

En dernier lieu, si l'élément vitré s'avère être un vitrage multiple du type double-vitrage, où différentes plaques vitrées sont assemblées par l'intermédiaire d'une lame de gaz à l'aide d'un joint périphérique, il est important de ne pas soumettre ledit joint à des forces de cisaillement excessives dues au report du poids des plaques vitrées sur celle qui se trouve effectivement fixée à la structure.

Différents montages de vitrages dits V.E.A. ont déjà été proposés. Ainsi, dans la demande de brevet EP-A-0 192 472 sont décrites des fixations pour double-vitrage permettant, par simple vissage à l'aide d'une vis fraisée, de serrer l'une ou l'autre des vitres du double-vitrage contre la structure porteuse. Il n'y a donc pas de liaison spécifique entre les deux vitres du double-vitrage qui puisse s'apposer au glissement longitudinal de la vitre non fixée par cette vis traversante, ce qui, semble-t-il, sollicite beaucoup le joint périphérique du double-vitrage.
En outre, si le montage décrit permet une certaine flexibilité du double-vitrage une fois fixé, elle n'est due qu'à la présence de joints en matériau compressible qui autorisent un certain débattement de cette vis par rapport à l'(aux) orifice(s) pratiqué(s) dans la ou les vitres du double-vitrage. Cette flexibilité est donc à la fois très réduite et incontrôlable.

Il est également connu, notamment de la demande de brevet EP-A-0 506 522, un système de liaison mécanique qui permet de rectifier le positionnement de l'élément vitré par rapport à la structure ou, en cas de vitrages multiples, de recentrer tous les orifices successifs percés dans chacune des vitres desdits vitrages, ceci à l'aide d'un système de bagues excentrées placées dans l'un desdits orifices. Cette demande décrit également un système de rotule articulée qui permet au double-vitrage de basculer selon un mouvement sphérique autour du centre de la rotule placé au niveau de la lame de gaz intermédiaire du double-vitrage. La flexibilité du vitrage s'en trouve garantie, mais la fabrication même d'une rotule articulée est assez exigeante, car il faut assurer une adéquation parfaite entre la tête de rotule et la cavité hémisphérique où elle doit se loger, et éviter tout risque de grippage entre les deux pièces. Une grande précision quant au dimensionnement des pièces est donc nécessaire, ce qui entraîne des coûts de fabrication assez élevés.

D'autres systèmes de liaison à rotule ont également été proposés.

Ainsi, la demande de brevet US-4-666 330 décrit un système de fixation utilisant une rotule tronquée placée dans une cavité cylindrique d'extrémité conique, la rotule étant bloquée dans la cavité à l'aide d'un anneau rigide. Ce blocage serré et efficace de la rotule en contact par de multiples points avec les parois de la cavité assure une bonne stabilité de l'assemblage.

De même, dans la demande de brevet EP-A-0 201 212 est décrit un système de fixation par points d'accrochage d'un vitrage utilisant un système de rotule articulée dans une cavité sphérique, autorisant ainsi un pivotement dans toutes les directions de la plaque par rapport à son point d'accrochage, par un mouvement sphérique autour du centre de la rotule qui se trouve sur un axe du plan médian de la plaque; ce document forme la base pour la division de la revendication 1.

Le but de l'invention est alors de pallier ces inconvénients en proposant un nouveau type de liaison mécanique entre des vitrages dits V.E.A et leur structure porteuse, liaison qui permette tout à la fois d"'accrocher" de manière sûre le vitrage à sa structure tout en lui conservant une capacité à fléchir, de manière durable, contrôlée et non pénalisante en termes de coût et de complexité de fabrication.

L'invention a pour objet un ensemble de liaison mécanique, notamment par accrochage selon un plan substantiellement vertical, d'une plaque, notamment un élément vitré, sur une structure porteuse. Cette liaison est conçue de manière à autoriser un mouvement de flexion d'amplitude contrôlée de ladite plaque, à l'aide d'un système de fixation articulée permettant le basculement de la plaque autour de son point d'appui sur ledit système.

L'invention s'applique avantageusement à tout élément vitré, qu'il s'agisse de vitrages monolithiques, feuilletés, et/ou multiples du type double-vitrages.

L'invention substitue donc à un mouvement sphérique autour du centre d'une rotule un mouvement pendulaire autour d'un point d'appui, mouvement pendulaire qui génère peu ou pas de frottement entre pièces mécaniques mais plutôt des points ou zones de surface réduite d'écrasement ou de "matage" dont on connaît la localisation. Le système articulé selon l'invention peut être de fabrication simple.

Par ailleurs, le système s'use relativement peu, et ce notamment si l'on peut munir avantageusement la zone prévisible où vont s'exercer les forces de contact générées par l'articulation de moyens de renforcement appropriés. Il est à noter qu'en tout état de cause, une éventuelle légère usure dans cette zone est sans aucun danger, le vitrage restant solidement fixé.

Un mode de réalisation préféré de cette fixation articulée selon l'invention comporte :
- au moins un élément définissant une cavité réceptrice globalement arrondie dans la zone du point d'appui,
- un élément porteur comportant une tige susceptible d'être reliée à la structure porteuse, ladite tige s'achevant à l'une de ses extrémités en une tête élargie comportant une surface latérale arrondie, tête apte à se loger avec un certain jeu dans la cavité, de manière à ce qu'une fois en place, sa surface latérale arrondie soit au contact de la zone d'appui dans la cavité, le rayon de courbure de ladite surface latérale arrondie étant inférieur à celui de la zone arrondie de la cavité réceptrice,
- au moins un élément de serrage/blocage destiné à maintenir ladite tête dans ladite cavité réceptrice.

Avantageusement, la cavité réceptrice est de forme géométrique simple, notamment de révolution et tout particulièrement cylindrique. La tête élargie adaptée à ce type de cavité a une face frontale aplatie, notamment tronquée, et une surface latérale également de révolution et substantiellement convexe.

On supprime ainsi de fait tout risque potentiel de grippage dans l'articulation, puisque la zone d'appui située au niveau de la surface convexe de la tête (en partie supérieure une fois l'élément vitré fixé verticalement sur la façade) est très localisée et que le basculement autour de cette zone d'appui est rendu possible par le jeu que l'on a défini entre la cavité réceptrice et la tête. Comme précédemment mentionné, on minimise considérablement les frottements créés avec l'articulation selon l'invention. Il s'agit plutôt de forces d'écrasement localisées entre tête et cavité réceptrice, de nature différente des forces de frottement à proprement parlé.

Il est à noter également que, s'il doit être prévu un certain jeu, en revanche il n'y a plus, comme dans le cas d'une articulation à rotule, un emboîtement sphère/cavité hémisphérique précédant nécessairement le montage effectif du vitrage sur la façage, sur le chantier. On gagne en simplicité de fabrication et on peut aussi envisager de monter la liaison mécanique en plusieurs étapes, notamment d'abord sur la ligne de fabrication même du vitrage puis une fois sur le chantier.

Avantageusement, on prévoit d'interposer entre le fond de la cavité réceptrice et la face frontale de la tête de l'élément à tige un matériau compressible et/ou souple, notamment sous forme d'un joint. Le même type de matériau peut également être prévu en interposition entre l'élément de serrage et la face arrière de la tête de l'élément à tige, notamment sous forme d'une rondelle glissée autour de la tige.

Ces matériaux compressibles et/ou souples sont de préférence en un élastomère présentant notamment un degré Shore compris entre 30 et 80, particulièrement entre 40 et 60. Il peut aussi s'agir de matériaux de nature métallique, notamment du type rondelles-ressorts également connues sous le terme de rondelles "Belleville".

Cette interposition de matériaux compressibles permet de faciliter grandement le mouvement de basculement de l'élément vitré par rapport à son point (ou sa zone) d'appui sur la tête articulée. Ces joints permettent de caler en souplesse la tête dans sa cavité réceptrice et d' "accompagner" le mouvement de basculement du vitrage en se comprimant localement de manière appropriée, et évitent que le basculement dans le système articulé selon l'invention ne génère des bruits peu agréables, quand les pièces en jeu sont métallique par exemple.

Plus précisément, on peut choisir la forme géométrique de la tête de l'élément muni de la tige de manière à ce qu'elle présente une surface latérale de révolution, cette tête comprenant deux portions de cône, de part et d'autre d'une portion annulaire plane où va se situer le point d'appui de l'élément vitré une fois posé, la surface "globalement" arrondie étant ainsi constituée par ces cônes associés par un anneau, le rayon de courbure étant à comprendre comme celui des deux cônes s'ils étaient directement accolés l'un à l'autre. Il s'agit donc d'une forme relativement simple à concevoir, qu'il sera très aisé de placer correctement dans la cavité cylindrique réceptrice adhoc, soit sur le lieu de fabrication du vitrage, soit sur le chantier du bâtiment à équiper.

Quant à la cavité réceptrice, elle est de préférence définie par une vis creuse traversant tout ou partie de la plaque à fixer, notamment une vis à tête fraisée. La cavité peut être avantageusement chemisée à l'aide d'un matériau de résistance mécanique supérieure à celle du corps de la vis. On réduit ainsi encore le risque d'écrasement localisé de la cavité par matage des pièces d'articulation dû aux charges permanentes exercées sur la tête et au fléchissement de la plaque.

L'élément dit de serrage ou blocage peut consister en une portion de vis creuse, maintenue en position par un écrou ou contre-écrou et disposée autour de la tige s'achevant par la tête pré-définie. Le profil intérieur de cet élément, par exemple évasé, est notamment conçu de manière à autoriser un débattement suffisant de la tige dans cette portion de vis.

Mais la cavité réceptrice peut également être définie par plus d'un élément, et notamment par une vis creuse définissant le fond de la cavité, dans laquelle vient s'emboîter, notamment par vissage, une autre pièce qui définit les parois latérales de cette cavité.

Toutes les adaptations de ce type bien spécifique de fixation articulée sont envisageables en fonction du type de plaque que l'on cherche à fixer.

Le cas de figure le plus simple est celui du vitrage monolithique, c'est-à-dire ne comportant qu'un substrat de verre unique. La liaison mécanique comprend alors une vis creuse définissant une cavité réceptrice de révolution, vis à tête fraisée placée dans un trou également fraisé ménagé dans le vitrage, avec éventuelle interposition d'un joint-collet, de manière à ce que la tête de la vis affleure à l'une des faces du vitrage. Elle comprend également une tige s'achevant en une tête engagée avec jeu dans la cavité réceptrice de la vis et maintenue en place par une pièce de serrage filetée, et des joints compressibles placés dans la cavité afin d'autoriser un basculement souple du vitrage par rapport à son point d'appui sur la tête, et un contre-écrou extérieur qui vient se visser sur la vis et la pièce de serrage filetée contre l'autre face du vitrage, avec éventuelles interposition d'un joint compressible entre verre et contre-écrou.

S'il s'agit en revanche d'un double-vitrage, il est alors avantageusement percé de trous successifs circulaires sur chacune des vitres qui le composent. Il est alors nécessaire de les étanchéifier, notamment à l'aide d'une bague d'étanchéité métallique associée à un double-joint en butyl et en élastomère du type silicone. La liaison peut alors comporter :
- une vis creuse qui traverse le double-vitrage et vient affleurer à la surface de la vitre extérieure par un trou fraisé avec interposition éventuelle d'un joint-collet,
- un écrou, muni éventuellement d'au moins un joint, qui vient fixer ladite vis à la vitre extérieure du double-vitrage,
- une cavité réceptrice dans la vis,
- un élément à tige dont la tête est destinée à être logée dans la cavité,
- une portion de vis creuse à profil intérieur évasé qui vient autour de la tige maintenir la tête dans la cavité par vissage sur l'écrou,
- des joints compressibles dans la cavité pour faciliter le basculement de la tête dans la cavité autour d'un point d'appui,
- un contre-écrou extérieur, qui assure du côté de la vitre intérieure, le serrage de l'ensemble en se vissant sur la portion de vis creuse, notamment en s'appuyant sur la bague d'étanchéité des trous percés dans les vitres.

De préférence, on peut disposer, dans le trou pratiqué dans la vitre intérieure du double-vitrage, deux bagues circulaires excentrées, au contact de l'écrou qui supporte ainsi la vitre intérieure par leur intermédiaire.

S'il s'agit de vitrages feuilletés, on peut adapter la liaison mécanique selon l'invention de manière à ce qu'elle comprenne une vis creuse éventuellement munie d'un joint-collet dans laquelle vient s'emboîter une pièce également creuse, l'association des deux pièces définissant la cavité réceptrice. La vis creuse traverse de préférence seulement la plaque intérieure du vitrage-feuilleté, la liaison comprend aussi l'élément à tige dont la tête est engagée dans la cavité réceptrice et maintenue par une pièce de serrage filetée, des joints en matériaux compressibles accompagnant le basculement de la tête dans la cavité autour du point d'appui du vitrage. Un contre-écrou vient se visser sur la pièce creuse et sur la pièce de serrage contre la face de la plaque intérieure du vitrage avec éventuelle interposition d'un joint souple.

Une fois ainsi fixé, un vitrage feuilleté paraît, vu de l'extérieur, dépourvu de tout élément de fixation débordant ou visible.

L'invention a également pour objet l'utilisation de l'ensemble de liaison mécanique pré-défini pour la constitution de façades de grande surface en vitrages du type VEA, ainsi que tout vitrage muni d'au moins une de ces liaisons destinée à le fixer à une structure porteuse.

L'invention a aussi pour objet tout ensemble de vitrages disposés bord à bord pour définir la surface d'une façade dans lequel les vitrages sont fixés par accrochage à une structure porteuse, éventuellement par l'intermédiaire d'un système de haubanage, à l'aide des liaisons mécaniques pré-définies, ainsi que toutes les opérations de montage impliquant lesdites liaisons.

Les caractéristiques avantageuses de l'invention apparaîtront plus clairement dans la description détaillée ci-après d'exemples de réalisation non limitatifs illustrés par les figures qui représentent :
- Fig. 1 : une vue de l'extérieur d'une façade équipée de vitrages accrochés par des points d'accrochage mécaniques.
- Fig. 2 : une coupe transversale, centrée au niveau d'un point d'accrochage d'un vitrage monolithique accroché comme à la figure 1.
- Fig. 3 : un schéma des étapes de montage de la liaison mécanique au niveau d'un point d'accrochage pour un vitrage monolithique, comme représenté à la figure 2.
- Fig. 4 : une coupe transversale, centrée au niveau d'un point d'accrochage, d'un double-vitrage accroché comme à la figure 1.
- Fig. 5 : un schéma des étapes de montage de la liaison mécanique au niveau d'un point d'accrochage pour un double-vitrage comme représenté à la figure 2.
- Fig. 6 : une coupe transversale, centrée au niveau d'un point d'accrochage, d'un vitrage feuilleté accroché comme à la figure 1.
- Fig. 7 : un schéma des étapes de montage de la liaison mécanique au niveau d'un point d'accrochage pour un vitrage feuilleté comme représenté à la figure 6.

On précise que les proportions entre les divers éléments représentés ne sont pas rigoureusement respectées dans ces figures afin d'en faciliter la lecture.

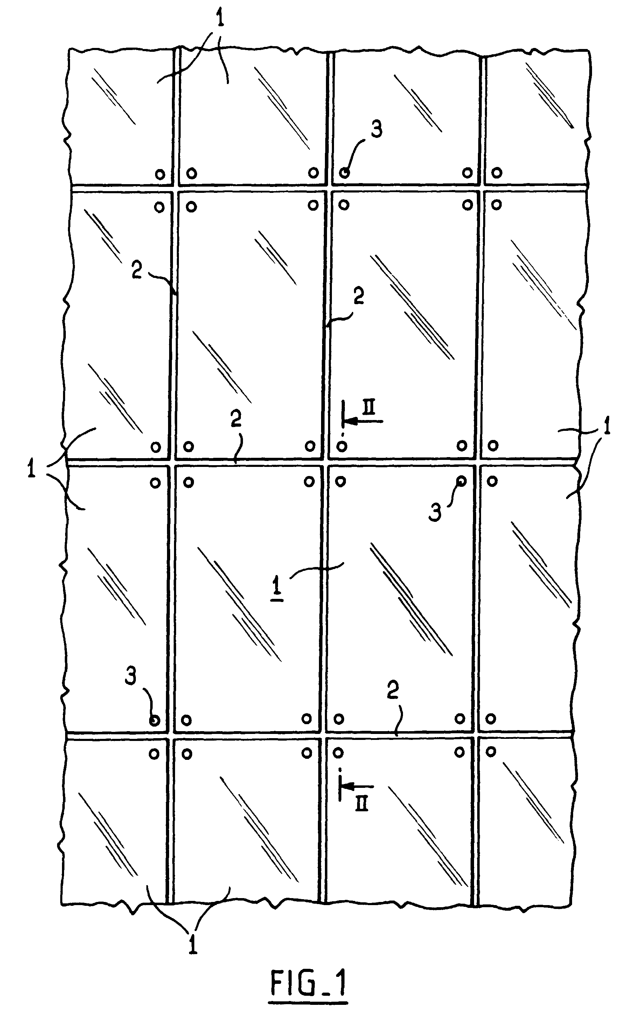

La figure 1 représente une vue partielle d'une façade constituée de vitrages 1 séparés par des joints 2 de faible largeur, chacun des vitrages 1 étant fixé mécaniquement à la structure porteuse à ses quatre coins par des points d'accrochage 3 de manière à ce que la surface extérieure ne présente globalement aucun élément débordant. Des endroits de fixation autres que situés dans le coin sont également possibles.

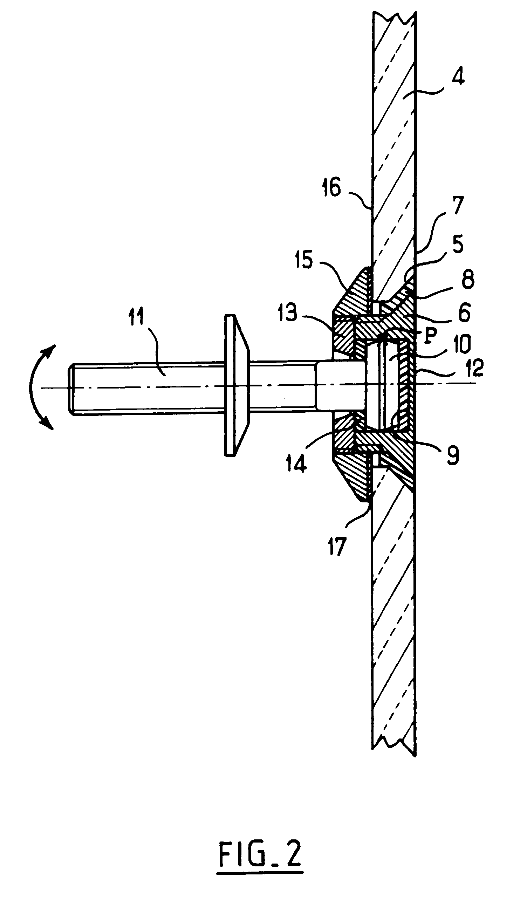

La figure 2, par une coupe transversale selon l'axe II de la figure 1 au niveau de ces points d'accrochage 3, va permettre d'expliciter un système de liaison mécanique selon l'invention adapté à la fixation d'un vitrage monolithique. Il s'agit d'un substrat 4 de verre silico-sodo-calcique clair d'une épaisseur de préférence d'au moins 8 millimètres, par exemple de 12, 15 ou 19 millimètres, percé d'un trou fraisé 5 dans chacun de ses coins. Ce trou est traversé par une vis métallique 6 également fraisée dont la tête vient affleurer la face 7 du vitrage destinée à être du côté "extérieur" de la façade une fois le vitrage fixé en façade. Un joint-collet souple 8 est interposé entre la vis 6 et les parois du trou 5 afin d'éviter un contact direct verre/métal. Cette vis 6 est creusée d'une cavité cylindrique 9. Dans cette cavité 9 vient se loger avec un certain jeu la tête 10 d'un élément à tige 11 dont l'autre extrémité est filetée afin de pouvoir être reliée à la structure porteuse non représentée. Cette tête 10 a une face frontale plane qui vient s'appuyer au fond de la cavité par l'intermédiaire d'un joint 12 en élastomère de degrés Shore d'environ 50. Sa face latérale, de révolution, est l'association de deux portions de cône par l'intermédiaire d'une portion annulaire. La tête 10 est maintenue en place dans la cavité par une pièce de serrage 13 vissée autour de la tige 11 par l'intermédiaire d'une rondelle 14 d'élastomère similaire à celui du joint 12. Un certain jeu est maintenu entre la cavité 9 et la tête 10, par un choix de diamètre de cavité 9 légèrement supérieur à celui de la zone annulaire de la tête 10 et par les matériaux souples 12, 14 interposés entre tête 11 et fond de cavité 9. Le débattement de la tige 11 est autorisé par le profil intérieur évasé de la pièce de serrage 13.

L'ensemble est serré par un écrou 15 qui vient se visser sur la face 16 "côté intérieur" du vitrage une fois fixé par l'intermédiaire d'une rondelle souple 17.

La liaison selon l'invention fonctionne de la manière suivante : une fois le vitrage accroché, comme représenté à la figure 2, selon un plan substantiellement vertical, son point d'appui sur la liaison mécanique va se trouver situé approximativement sur la zone annulaire de la tête 10, en partie supérieure, point (ou zone) d'appui marqué sur la figure par la lettre P. C'est donc autour de ce point P que le vitrage 4 va pouvoir basculer de manière pendulaire et dans toutes les directions, basculement concrétisé par le basculement de la tête 10 autour de ce point P dans sa cavité 9, ce qui va conduire à "écraser" plus ou moins, localement, et de manière complémentaire, les joints 12 et 14. L'amplitude de la flexion autorisée du vitrage est contrôlée en définissant avec précision le jeu qui est laissé entre la tête 10 et la cavité 9 qui la reçoit, ainsi que la capacité à se comprimer, traduite ici en degrés Shore, des joints 12 et 14. Usuellement, on règlera ces paramètres pour que l'amplitude soit de quelques degrés, ce qui suffit à permettre au vitrage de fléchir légèrement soit en cas de vents violents, soit pour tenir compte des tolérances quant à son positionnement par rapport à la structure porteuse.

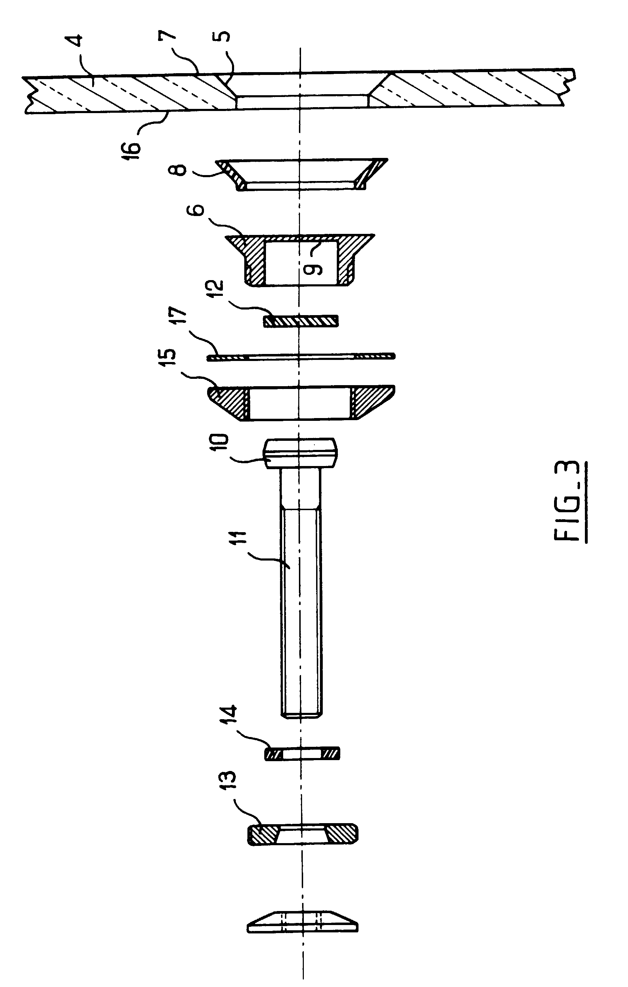

La figure 3 permet d'expliciter l'assemblage de la liaison mécanique selon la figure 2 :
- on glisse, du côté de la face extérieure 7 du vitrage 4 la vis 6 dans son joint-collet 8,
- du côté de la face intérieure 16 du vitrage 4, on serre la vis 6 à l'aide de l'écrou 15 muni de son joint 17,
- reste à glisser le joint 12 au fond de la cavité 9, puis la tête 10 munie de sa tige 11 autour de laquelle on a enfilé la rondelle 14,
- en dernier lieu, on serre la tête 10 en vissant la pièce de serrage 13 sur l'écrou 15.

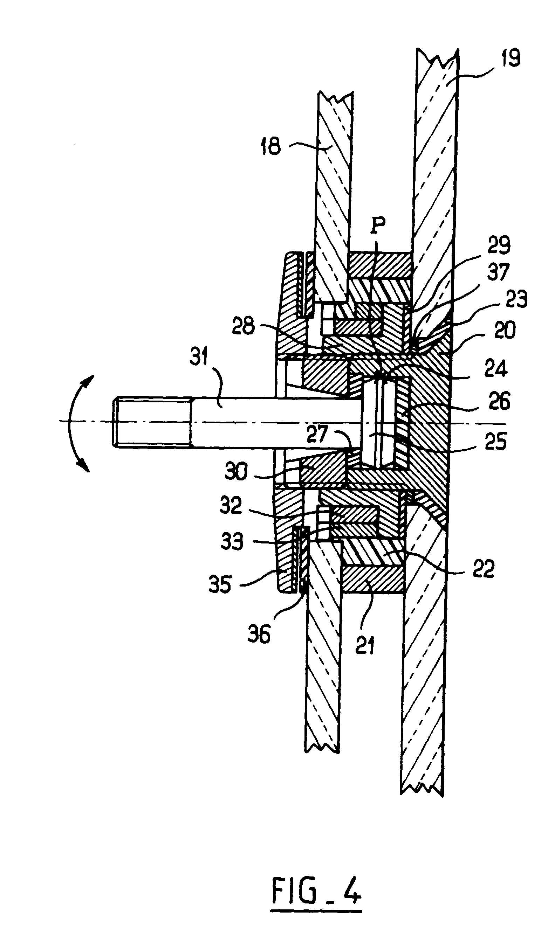

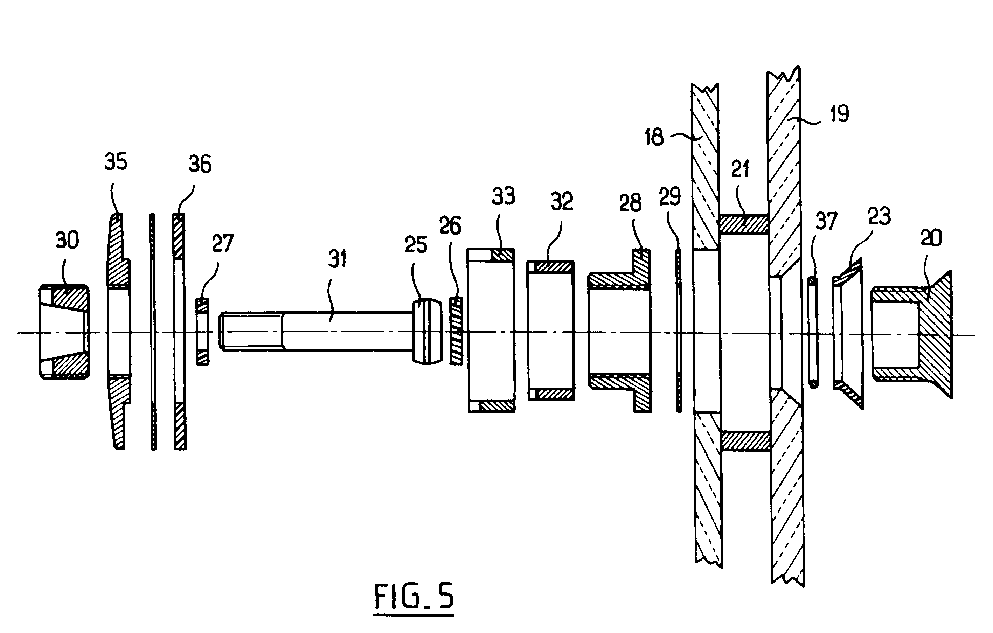

Les figures 4 et 5 se rapportent à une liaison mécanique selon l'invention adaptée aux double-vitrages.

La figure 4 représente la liaison une fois le vitrage fixé en façade. Le vitrage est ici composé d'une vitre 18 dite "intérieure" et d'une vitre 19 dite "extérieure", toutes deux en verre silico-sodo-calcique flotté. Les termes "extérieure" et "intérieure" font référence à la position de chacune des vitres par rapport à la façade. (On peut bien sûr envisager également que l'une au moins des vitres ait une structure feuilletée).

Les deux vitres 18, 19 sont séparées par une lame de gaz ou d'air et assemblées au moyen d'un cadre espaceur périphérique non représenté muni de joints d'étanchéité connus de l'art. Au niveau du point d'accrochage mécanique, la vitre extérieure 19 est percée d'un trou circulaire fraisé, et la vitre intérieure 18 d'un autre trou circulaire plus grand et centré sur le précédent. Une vis métallique 20 à tête fraisée traverse les deux vitres 18, 19 par les trous circulaires qui ont été préalablement étanchéifiés, notamment comme décrit dans la demande de brevet EP-A-0 506 522, à l'aide d'une bague métallique 21 enduite d'un premier joint d'étanchéité en caoutchouc butyl non représenté, puis d'un second, référencé 22 en silicone. La vis 20 vient affleurer à la surface de la vitre extérieure 19, elle est munie d'un joint-collet souple 23. Elle a une structure tout à fait similaire à celle de la vis décrite dans le cadre de la figure 2 : elle est percée d'une cavité cylindrique 24 où vient se loger avec un certain jeu la tête 25 d'un élément à tige, élément qui est également tout à fait similaire à celui de la figure 2.

Sont également présents dans la cavité cylindrique 24, comme précédemment, deux joints compressibles 26, 27.

Ce qui diffère de la figure 2 réside notamment dans la présence d'un écrou de serrage supplémentaire 28 qui, se vissant sur la vis 20, va la fixer à la vitre extérieure 19 en se plaquant contre sa face interne par l'intermédiaire d'un joint souple 29. Un joint torique 37 fait la jonction entre la base du joint-collet 23 et ledit joint souple 29. Sur la vis 20 vient se visser la pièce de serrage 30 qui permet de maintenir en place la tête 20, pièce dont le profil intérieur évasé permet à la tige 31 un certain débattement.

Entre l'écrou de serrage 28 et le trou pratiqué dans la vitre intérieure 18 sont interposées deux bagues circulaires excentrées 32, 33 qui vont permettre notamment de corriger tout défaut de centrage entre les trous pratiqués dans les deux vitres. Ces bagues et leur principe de fonctionnement font l'objet de la demande de brevet EP-A-0 506 522 pré-citée à laquelle on se rapportera pour plus de détails. L'écrou de serrage 28 va donc de fait supporter la vitre intérieure 18 par leur intermédiaire.

Le serrage de la liaison mécanique est réalisé par un contre-écrou 35 qui vient se visser sur l'extrémité de la vis 20 et, en s'appuyant sur la bague d'étanchéité 22, se plaquer contre la face extérieure de la vitre intérieure 18 par l'intermédiaire d'un joint souple 36.

Comme à la figure 2, c'est autour du point d'appui P du double-vitrage que ce dernier va pouvoir, une fois fixé, basculer selon un mouvement pendulaire. On peut noter que la liaison mécanique ainsi réalisée autorise un certain report de poids d'une vitre sur l'autre, et ne sollicite ainsi pas exagérément le joint périphérique du double-vitrage.

La figure 5 permet d'expliciter l'assemblage de la liaison selon la figure 4 :
- on glisse, du côté de la vitre extérieure 19, la vis 20 dans son joint-collet 23,
- du côté de la vitre intérieure 18, on dispose le joint torique 37 destiné à améliorer l'étanchéité, notamment vis-à-vis de l'eau, contre la base du joint-collet 23, puis enfin le joint souple 29 et l'écrou de serrage 28 qui assure le maintien en place des éléments,
- on installe ensuite les deux bagues excentrées 32, 33,
- puis on dépose un joint en silicone d'étanchéité 22 contre la bague métallique 21 déjà pré-enduite lors de l'assemblage du double-vitrage d'un premier joint à base de caoutchouc butyl,
- reste ensuite à mettre le joint 26 au fond de la cavité 24, puis à y introduire la tête 25 de l'élément à tige 31, enfin à glisser la rondelle 27 autour de ladite tige l'ensemble des pièces 25, 26, 27 étant maintenu par serrage à l'aide du vissage de la pièce 30,
- en dernier lieu, on serre l'ensemble par un contre-écrou 35 associé à des joints appropriés dont le joint 36 qui vient se plaquer contre la face externe de la vitre 18.

Ce que l'on peut noter, c'est que l'on peut décomposer le montage en plusieurs phases. Ainsi, une première phase peut être réalisée sur le lieu de fabrication ou de transformation du double-vitrage lui-même, consistant à procéder à toutes les étapes de montage décrites ci-dessus jusqu'à l'installation des bagues excentrées 32, 33.

Ainsi démunis de pièces "débordantes", les double-vitrages sont aisément stockables et transportables, en un minimum de volume et de risque de casse. C'est seulement sur le chantier que l'on peut ensuite procéder aisément aux étapes ultérieures de montage.

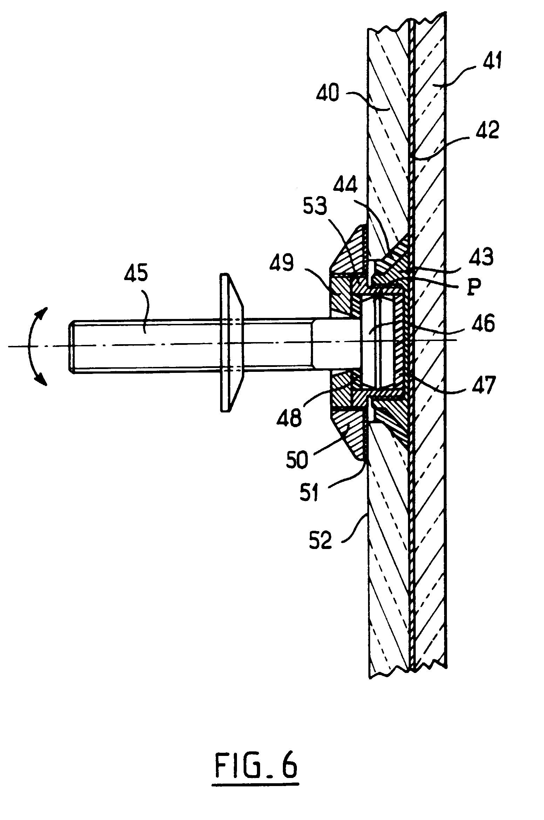

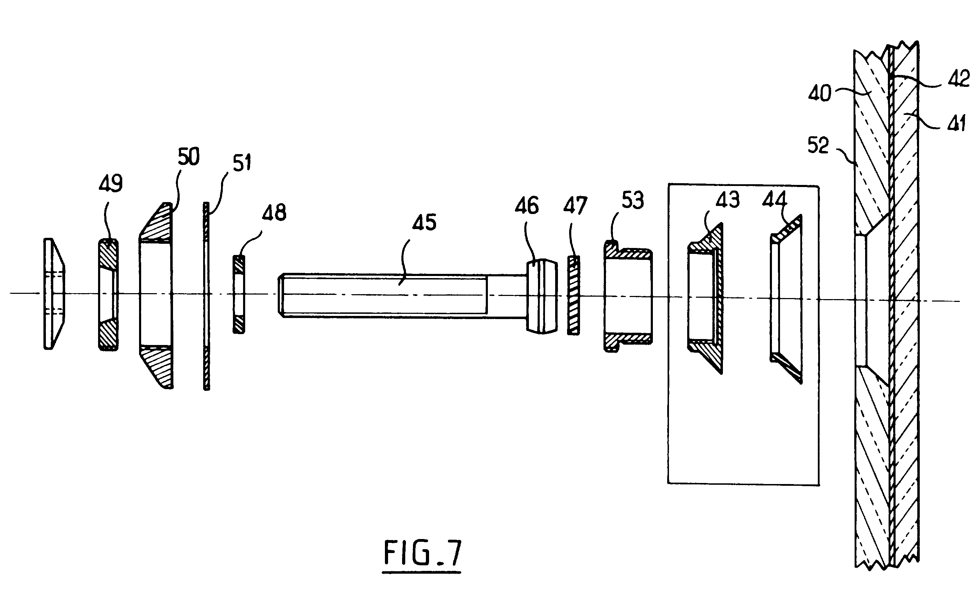

Les figures 6 et 7 se rapportent à une liaison mécanique selon l'invention adaptée cette fois aux vitrages feuilletés.

La figure 6 représente la liaison une fois le vitrage fixé en façade. Le vitrage est ici composé d'une plaque en verre silico-sodo-calcique flotté dite "intérieure" 40 assemblée à une autre plaque en verre de même nature dite "extérieure" 41 par l'intermédiaire d'une feuille intercalaire en matière plastique du type polyvinylbutyral, de manière connue. (Les termes "intérieure" et "extérieure" ont la même signification que précédemment). Seule est percée ici la plaque intérieure 41 d'un trou fraisé, dans lequel comme précédemment est insérée une vis creuse 43 par l'intermédiaire d'un joint-collet 44, la tête de vis s'appuyant contre la surface de la feuille intercalaire 42. Ainsi, aucun élément "débordant" ne sera visible sur la façade côté extérieur, ce qui est particulièrement esthétique et supprime de fait toute possibilité de pont thermique entre l'extérieur et l'intérieur.

On retrouve également l'élément à tige 45 muni d'une tête 46, ainsi que la pièce de serrage 49 et l'écrou 50 qui vient s'appuyer par l'intermédiaire d'un joint 51 sur la face externe 52 de la plaque intérieure 40. Les différences principales d'avec les liaisons mécaniques adaptées aux vitrages monolithiques (figure 2) ou aux double-vitrages (figure 4) résident d'une part dans le dimensionnement de la vis creuse 43, d'autre part dans la présence d'une pièce supplémentaire 53. En effet, ici, la vis creuse est beaucoup plus courte : ne subsiste pratiquement que sa tête conique. Par ailleurs, elle définit toujours une cavité, mais seul le fond circulaire de cette cavité est, comme précédemment, au contact d'un joint compressible.

Les parois latérales de la cavité sont par contre munies d'un pas de vis, où vient se visser la pièce 53 ayant une forme d'écrou et elle-même creusée d'une cavité cylindrique où vient se loger la tête 46. On remplace ainsi la vis creuse longue précédente par une tête de vis 43 se prolongeant par une pièce 53. L'intérêt de cette modification est qu'elle permet d'effectuer aisément l'assemblage et le calandrage du vitrage feuilleté, ce que l'on comprendra mieux au vu de la figure 7 : les pièces 44 et 43 encadrées à la figure 7 sont les pièces qui sont mises en place lors de l'assemblage du vitrage feuilleté et qui sont donc présentes lors de son calandrage.

La vis 43 est ici suffisamment courte pour qu'aucun élément ne "déborde" des faces des plaques 40 et 41 lors de leur calandrage, ce qui est très avantageux puisque l'on peut opérer ce calandrage sans en modifier aucunement les paramètres usuels.

Après calandrage, toutes les autres pièces de la liaision sont montées : la pièce 53, le joint 47, puis la tête 46 qui vient se loger dans la cavité de la pièce 53, puis enfin le second joint 48, l'écrou 50 et son joint 51 et la pièce de serrage 49. Comme dans le cas des double-vitrages par exemple, une partie de ces pièces peut en fait n'être installée qu'une fois sur le chantier, puisque le vitrage feuilleté muni des pièces 43, 44 après assemblage, dépourvu d'élément débordant, est aisément stockable et transportable tel quel.

Une variante de fixation adaptée aux vitrages feuilletés peut consister à utiliser une vis creuse non fraisée dont la tête est munie d'une rondelle spécifique collée à la vitre extérieure par l'intermédiaire d'une feuille intercalaire, comme cela est décrit dans la demande de brevet EP-A-0 340 089.

En conclusion, les liaisons à articulation selon l'invention peuvent s'adapter aisément à des types de vitrages très variés. Elles sont simples à réaliser, fiables dans leur utilisation car réduisant tout risque de grippage. Elles peuvent être montées en une ou plusieurs phases sans complexité de montage particulière. On garde en outre parfaitement le contrôle dans l'amplitude adaptée au fléchissement du vitrage une fois posé, par le choix du jeu entre cavité et tête articulée et de la compressibilité des joints souples qui interviennent dans l'articulation pendulaire de l'invention.

## Revendications

1. Ensemble de liaison mécanique, notamment par accrochage selon un plan substantiellement vertical, d'une plaque, notamment d'un élément vitré (1, 4, 18, 19, 40, 41, 42) sur une structure porteuse, ladite liaison autorisant un mouvement de flexion d'amplitude contrôlée de ladite plaque à l'aide d'un système de fixation articulée comportant :
- au moins un élément (6, 20, 43, 53) définissant une cavité réceptrice (9, 24) munie d'une zone arrondie,
- un élément porteur comportant une tige (11, 31, 45) susceptible d'être reliée à la structure porteuse, ladite tige s'achevant à l'une de ses extrémités en une tête élargie (10, 25, 46) comportant une surface latérale globalement arrondie, tête apte à se loger dans la cavité, **caractérisé en ce qu**'il est prévu un jeu entre la tête élargie et sa cavité réceptrice, autorisant le basculement de la plaque autour de son point d'appui (P) sur ledit système par mouvement pendulaire et avec peu de frottements entre les pièces mécaniques du système.

2. Ensemble de liaison mécanique, selon la revendication 1, **caractérisé en ce que** la plaque est un vitrage monolithique (4), feuilleté (40, 41, 42) ou multiple du type double-vitrage (18, 19).

3. Ensemble de liaison mécanique selon la revendication 1, **caractérisé en ce que** le rayon de courbure de la surface latérale arrondie de la tête (10, 25, 46) est inférieur à celui de la zone arrondie de la cavité réceptrice (9, 24).

4. Ensemble de liaison mécanique selon la revendication 3, **caractérisé en ce que** le système de fixation articulée comporte au moins un élément de serrage/blocage (13, 30, 49) destiné à maintenir la tête (10, 25, 46) dans sa cavité réceptrice (9, 24).

5. Ensemble de liaison mécanique selon la revendication 4, **caractérisé en ce que** la cavité réceptrice (9, 24) est de révolution, notamment est cylindrique, **et en ce que** la tête élargie (10, 25, 46) a une face frontale aplatie, notamment tronquée et une surface latérale de révolution substantiellement convexe.

6. Ensemble de liaison mécanique selon l'une des revendications 4 ou 5, **caractérisé en ce qu**'au moins un matériau compressible et/ou souple, notamment sous forme d'un joint (12, 26, 47), est interposé entre le fond de la cavité réceptrice (9, 24) et la face frontale de la tête (10, 25, 46) de l'élément à tige.

7. Ensemble de liaison mécanique selon l'une des revendications 4, 5 ou 6, **caractérisé en ce qu**'au moins un matériau compressible et/ou souple est interposé entre l'élément de serrage (13, 30, 49) et la face arrière de la tête (10, 25, 46) de l'élément à tige, matériau notamment sous forme d'une rondelle (14, 27, 48) glissée autour de ladite tige (11, 31, 45).

8. Ensemble de liaison mécanique selon l'une des revendications 6 ou 7, **caractérisé en ce qu**'au moins un des matériaux compressibles et/ou souples est un matériau en élastomère, notamment de degré Shore comprise entre 30 et 80 et de préférence 40 à 60, ou un matériau métallique du type rondelles-ressorts comme des rondelles Belleville.

9. Ensemble de liaison mécanique selon l'une des revendications 4 à 8, **caractérisé en ce que** la tête (10, 25, 46) de l'élément muni d'une tige (11, 31, 45) a une surface latérale de révolution comprenant deux portions de cône de part et d'autre d'une portion annulaire plane, portion plane où se situe le point d'appui (P) de la plaque une fois fixée à la structure porteuse.

10. Ensemble de liaison mécanique selon l'une des revendications 4 à 9, **caractérisé en ce que** l'élément définissant la cavité réceptrice (9, 24) est une vis creuse (6, 20) traversant tout ou partie de la plaque, notamment une vis à tête fraisée, et dont la cavité peut être chemisée à l'aide d'un revêtement en un matériau de résistance mécanique supérieure à celui du corps de ladite vis.

11. Ensemble de liaison mécanique selon l'une des revendications 4 à 10, **caractérisé en ce que** la cavité réceptrice est définie par plus d'un élément, et notamment par une vis creuse (43) définissant le fond de la cavité dans laquelle vient s'emboîter, notamment par vissage, une autre pièce (53) qui définit les parois latérales de ladite cavité.

12. Ensemble de liaison mécanique selon l'une des revendications 4 à 11, **caractérisé en ce que** l'élément de serrage est une portion de vis creuse (13, 30, 49) maintenue en position par un écrou (15, 28, 50) ou contre-écrou et disposée autour de la tige ( 11, 31, 45), son profil intérieur, notamment évasé, étant conçu de manière à autoriser un certain débattement de la tige dans ladite portion de vis.

13. Ensemble de liaison mécanique selon l'une des revendications précédentes, **caractérisé en ce que** la plaque est un vitrage monolithique (4), **et en ce qu**'elle comprend une vis creuse (6) définissant une cavité réceptrice (9) et placée dans un trou fraisé (5) ménagé dans le vitrage (4) avec éventuellement interposition d'un joint-collet (8) de manière à affleurer à l'une des faces (7) du vitrage (4), un élément à tige (11) dont la tête (10) est engagée dans la cavité (9) et maintenue en place par une pièce de serrage filetée (13), des joints (12, 14) de matériau compressible placés dans la cavité (9) autorisant le basculement de la tête (10) dans sa cavité (9) autour du point d'appui (P) du vitrage (4), et un contre-écrou (15) qui vient se visser sur la vis (6) et la pièce de serrage (13) contre l'autre face (16) du vitrage (4), avec éventuelle interposition d'un joint compressible (17) entre verre (4) et contre-écrou (15).

14. Ensemble de liaison mécanique selon l'une des revendications 1 à 12, **caractérisée en ce que** la plaque est un double-vitrage (18, 19) qui, en vue de sa fixation à la structure porteuse, est percé de trous successifs circulaires sur chacune de ses vitres, trous étanchéifiés, notamment à l'aide d'une bague d'étanchéité métallique associée à un joint en élastomère du type silicone (21, 22).

15. Ensemble de liaison mécanique selon la revendication 14, **caractérisée en ce qu**'elle comporte :
- une vis creuse (20) qui traverse le vitrage (18, 19) et vient affleurer à la surface de la vitre extérieure (19) par un trou fraisé avec interposition éventuelle d'un joint-collet (23),
- un écrou (28) éventuellement muni d'au moins un joint (29), qui vient fixer ladite vis (20) à la vitre extérieure (19) du double-vitrage,
- une cavité réceptrice (24) dans la vis (20),
- un élément à tige (31) dont la tête (25) est logée dans la cavité (24),
- une portion de vis creuse (30) à profil intérieur évasé qui vient autour de la tige (31) maintenir la tête (25) dans la cavité (24) par vissage sur l'écrou (28),
- des joints compressibles (26, 27) dans la cavité (24) pour autoriser le basculement de la tête (25) dans la cavité (24) autour du point d'appui (P) du vitrage (18, 19),
- un contre-écrou (35) extérieur du côté de la vitre intérieure (18), qui assure le serrage de l'ensemble en se vissant sur la portion de vis creuse (30), notamment en s'appuyant sur la bague d'étanchéité (21, 22).

16. Ensemble de liaison mécanique selon la revendication 15, **caractérisé en ce que** deux bagues circulaires (32, 33) excentrées sont disposées dans le trou pratiqué dans la vitre intérieure (18) du double-vitrage (18, 19), au contact de l'écrou (28) qui supporte ainsi la vitre intérieure (18) par leur intermédiaire.

17. Ensemble de liaison mécanique selon l'une des revendications 1 à 12, **caractérisé en ce que** la plaque est un vitrage feuilleté (40, 41, 42) **et en ce qu'**elle comprend une vis creuse (43) éventuellement munie d'un joint-collet (44) dans laquelle vient s'emboîter une pièce (53) également creuse, l'association des deux pièces définissant la cavité réceptrice, la vis creuse traversant seulement la plaque intérieure (40) du vitrage, un élément à tige (45) dont la tête (46) est engagée dans la cavité receptrice et maintenue en place par une pièce de serrage filetée (49), des joints en matériaux compressibles (47, 48) placés dans la cavité accompagnant le basculement de la tête (46) dans la cavité autour du joint d'appui (P) du vitrage, et un contre-écrou qui vient se visser sur la pièce creuse (53) filetée et sur la pièce de serrage (49) contre la face (52) de la plaque intérieure (40) du vitrage avec éventuelle interposition d'un joint souple (51).

18. Utilisation de l'ensemble de liaison mécanique, selon l'une des revendications précédentes pour la constitution de façades de grande surface en vitrages du type VEA.

19. Vitrage équipé d'au moins un ensemble de liaison mécanique destiné à le fixer à une structure porteuse selon l'une des revendications 1 à 17.

20. Ensemble de vitrages disposés bord à bord pour définir la surface d'une façade dans lequel les vitrages sont fixés par accrochage à une structure porteuse à l'aide des liaisons mécaniques selon l'une des revendications 1 à 17, éventuellement par l'intermédiaire d'un système de haubanage.

## Patentansprüche

1. Aufbau zur mechanischen Verbindung einer Platte, speziell einer Verglasung (1, 4, 18, 19, 40, 41, 42), mit einer Tragstruktur insbesondere durch Verankerung in einer im wesentlichen vertikalen Ebene, wobei diese Verbindung eine Biegebewegung mit kontrollierter Amplitude der Platte mittels eines gelenkigen Befestigungssystems zuläßt, welches
- mindestens ein Element (6, 20, 43, 53), das einen mit einem abgerundeten Bereich versehenen Aufnahmehohlraum (9, 24) bildet, und
- ein Tragelement umfaßt, das eine Stange (11, 31, 45) enthält, die mit der Tragstruktur verbunden werden kann und an einem Ende in einen verdickten Kopf (10, 25, 46) ausläuft, der eine insgesamt abgerundete Seitenfläche besitzt und in der Lage ist, vom Hohlraum aufgenommen zu werden, **dadurch gekennzeichnet, daß** zwischen dem verdickten Kopf und seinem Aufnahmehohlraum ein Spiel vorgesehen ist, welches das Schwenken der Platte um ihren Auflagepunkt (P) auf dem System durch eine Pendelbewegung und mit geringer Reibung zwischen den mechanischen Bauteilen des Systems ermöglicht.

2. Mechanischer Verbindungsaufbau nach Anspruch 1, **dadurch gekennzeichnet, daß** die Platte eine Einscheiben- (4), Verbund- (40, 41, 42) oder Mehrfachverglasung vom Typ einer Doppelverglasung (18, 19) ist.

3. Mechanischer Verbindungsaufbau nach Anspruch 1, **dadurch gekennzeichnet, daß** der Krümmungsradius der abgerundeten Seitenfläche des Kopfs (10, 25, 46) kleiner als der des abgerundeten Bereichs des Aufnahmehohlraums (9, 24) ist.

4. Mechanischer Verbindungsaufbau nach Anspruch 3, **dadurch gekennzeichnet, daß** das gelenkige Befestigungssystem mindestens ein Spann- und Arretierteil (13, 30, 49) enthält, das den Kopf (10, 25, 46) im Aufnahmehohlraum (9, 24) halten soll.

5. Mechanischer Verbindungsaufbau nach Anspruch 4, **dadurch gekennzeichnet, daß** der Aufnahmehohlraum (9, 24) rotationssymmetrisch, insbesondere zylindrisch, ist und daß der verdickte Kopf (10, 25, 46) eine insbesondere kegelstumpfförmige abgeflachte Vorderfläche und eine im wesentlichen konvexe rotationssymmetrische Seitenfläche besitzt.

6. Mechanischer Verbindungsaufbau nach Anspruch 4 oder 5, **dadurch gekennzeichnet, daß** zwischen dem Boden des Aufnahmehohlraums (9, 24) und der Vorderfläche des Kopfs (10, 25, 46) des Stangenelements mindestens ein zusammendrückbares und/oder nachgiebiges Material, insbesondere in Form einer Dichtung (12, 26, 47), eingelegt ist.

7. Mechanischer Verbindungsaufbau nach einem der Ansprüche 4, 5 oder 6, **dadurch gekennzeichnet, daß** zwischen dem Spannteil (13, 30, 49) und der Rückseite des Kopfs (10, 25, 46) des Stangenelements mindestens ein zusammendrückbares und/oder nachgiebiges Material, das insbesondere die Form einer Unterlegscheibe (14, 27, 48) aufweist, die auf der Stange (11, 31, 45) gleitet, eingelegt ist.

8. Mechanischer Verbindungsaufbau nach Anspruch 6 oder 7, **dadurch gekennzeichnet, daß** mindestens eines der zusammendrückbaren und/oder nachgiebigen Materialien ein Elastomermaterial, das insbesondere eine Shore-Härte von 30 bis 80 und vorzugsweise 40 bis 60 aufweist, oder ein metallisches Material vom Typ eines glatten Federrings wie eines Belleville-Dichtungsrings ist.

9. Mechanischer Verbindungsaufbau nach einem der Ansprüche 4 bis 8, **dadurch gekennzeichnet, daß** der Kopf (10, 25, 46) des mit einer Stange (11, 31, 45) versehenen Elements eine rotationssymmetrische Seitenfläche besitzt, die zwei kegelförmige Bereiche auf beiden Seiten eines flachen ringförmigen Bereichs aufweist, auf welchem sich der Auflagepunkt (P) der Platte befindet, nachdem sie an der Tragstruktur befestigt worden ist.

10. Mechanischer Verbindungsaufbau nach einem der Ansprüche 4 bis 9, **dadurch gekennzeichnet, daß** das den Aufnahmehohlraum (9, 24) bildende Element eine Hohlschraube (6, 20) ist, die ganz oder teilweise durch die Platte führt und insbesondere aus einer Senkkopfschraube besteht und deren Hohlraum mit einer Beschichtung aus einem Material ausgekleidet sein kann, dessen mechanische Widerstandsfähigkeit größer als die des Körpers dieser Schraube ist.

11. Mechanischer Verbindungsaufbau nach einem der Ansprüche 4 bis 10, **dadurch gekennzeichnet, daß** der Aufnahmehohlraum aus mehr als einem Element und insbesondere aus einer Hohlschraube (43) gebildet ist, welche den Boden des Hohlraums begrenzt, in welchen sich insbesondere durch Verschrauben ein anderes Bauteil (53) einfügt, das die Seitenwände dieses Hohlraums bildet.

12. Mechanischer Verbindungsaufbau nach einem der Ansprüche 4 bis 11, **dadurch gekennzeichnet, daß** das Spannteil (13, 30, 49) ein Teil der Hohlschraube ist, der von einer Mutter oder Kontermutter (15, 28, 50) an seiner Stelle festgehalten und auf der Stange (11, 31, 45) angeordnet und dessen insbesondere sich erweiterndes Innenprofil so konzipiert ist, daß es in diesem Teil der Schraube eine gewisse Abfederung der Stange ermöglicht.

13. Mechanischer Verbindungsaufbau nach einem der vorhergehenden Ansprüche, **dadurch gekennzeichnet, daß** die Platte eine Einscheibenverglasung (4) ist **und daß** sie eine Hohlschraube (6), die einen Aufnahmehohlraum (9) bildet und in einem in der Verglasung (4) angebrachten Senkloch (5), gegebenenfalls über eine Kragendichtung (8), derart angeordnet ist, daß sie mit einer Seite (7) der Verglasung (4) bündig abschließt, ein Stangenelement (11), dessen Kopf (10) in den Hohlraum (9) eingreift und an seiner Stelle von einem mit Außengewinde versehenen Spannteil (13) gehalten wird, im Hohlraum (9) angeordnete Dichtungen (12, 14) aus zusammendrückbarem Material, die das Schwenken des Kopfs (10) in seinem Hohlraum (9) um den Auflagepunkt (P) der Verglasung (4) ermöglichen, und eine Kontermutter (15), durch deren Anziehen auf der Schraube (6), gegebenenfalls über eine zusammendrückbare Dichtung (17) zwischen Glas (4) und Kontermutter (15), das Spannteil (13) auf die andere Seite (16) der Verglasung (4) geschraubt wird, umfaßt.

14. Mechanischer Verbindungsaufbau nach einem der Ansprüche 1 bis 12, **dadurch gekennzeichnet, daß** die Platte eine Doppelverglasung (18, 19) ist, die zu ihrer Befestigung an der Tragstruktur auf ihren Glasscheiben mit aufeinanderfolgenden kreisrunden Löchern durchbohrt ist, die insbesondere mit einem metallischen Dichtungsring (21, 22) abgedichtet sind, der mit einer Dichtung aus einem Elastomer wie Silicon verbunden ist.

15. Mechanischer Verbindungsaufbau nach Anspruch 14, **dadurch gekennzeichnet, daß** er umfaßt:
- eine Hohlschraube (20), die durch die Verglasung (18, 19) führt und mit der Oberfläche der Außenglasscheibe (19), gegebenenfalls über eine Kragendichtung (23), durch ein Senkloch bündig abschließt,
- eine gegebenenfalls mit mindestens einer Dichtung (29) versehene Mutter (28), durch welche die Schraube (20) an der Außenglasscheibe (19) der Doppelverglasung befestigt wird,
- einen Aufnahmehohlraum (24) in der Schraube (20),
- ein Stangenelement (31), dessen Kopf (25) vom Hohlraum (24) aufgenommen wird,
- ein Hohlschraubenteil (30) mit sich erweiterndem Innenprofil, welcher auf der Stange (31) durch Anziehen der Mutter (28) den Kopf (25) im Hohlraum (24) hält,
- zusammendrückbare Dichtungen (26, 27) im Hohlraum (24), um im Hohlraum (24) das Schwenken des Kopfs (25) um den Auflagepunkt (P) der Verglasung (18, 19) zu ermöglichen, und
- eine Außenkontermutter (35) auf der Seite der Innenglasscheibe (18), durch welche das Verspannen des Aufbaus sihergestellt wird, indem sie auf dem Hohlschraubenteil (30) angezogen wird, insbesondere indem sie sich an den Dichtungsring (21, 22) anpreßt.

16. Mechanischer Verbindungsaufbau nach Anspruch 15, **dadurch gekennzeichnet, daß** zwei exzentrische kreisrunde Ringe (32, 33) in dem in der Innenglasscheibe (18) der Doppelverglasung (18, 19) angebrachten Loch im Kontakt mit der Mutter (28) angeordnet sind, welche so über ihre Vermittlung die Innenglasscheibe (18) trägt.

17. Mechanischer Verbindungsaufbau nach einem der Ansprüche 1 bis 12, **dadurch gekennzeichnet, daß** die Platte eine Verbundverglasung (40, 41, 42) ist und daß sie eine gegebenenfalls mit einer Kragendichtung (44) versehene Hohlschraube (43), in welche sich ein ebenfalls hohles Teil (53) einfügt, wobei durch die Verbindung der beiden Teile der Aufnahmehohlraum gebildet wird und die Hohlschraube nur durch die Innenglasscheibe (40) der Verglasung führt, ein Stangenelement (45), dessen Kopf (46) in den Aufnahmehohlraum eingreift und an seiner Stelle von einem mit Außengewinde versehenen Spannteil (49) gehalten wird, im Hohlraum angeordnete Dichtungen (47, 48) aus zusammendrückbaren Materialien, die das Schwenken des Kopfs (46) im Hohlraum um den Auflagepunkt (P) der Verglasung begleiten, und eine Kontermutter, durch deren Anziehen auf dem mit Außengewinde versehenen Hohlteil (53) und auf dem Spannteil (49) diese, gegebenenfalls über eine nachgiebige Dichtung (51), an die Seite (52) der Innenglasscheibe (40) der Verglasung geschraubt werden, umfaßt.

18. Verwendung des mechanischen Verbindungsaufbaus nach einem der vorhergehenden Ansprüche zur Herstellung von Fassaden mit großflächigen Verglasungen vom Typ VEA.

19. Verglasung, die mit mindestens einem mechanischen Verbindungsaufbau nach einem der Ansprüche 1 bis 17 ausgerüstet ist, der vorgesehen ist, sie an einer Tragstruktur zu befestigen.

20. Einheit aus Verglasungen, die Kante an Kante angeordnet sind, um die Oberfläche einer Fassade zu bilden, in welcher die Verglasungen an einer Tragstruktur mittels mechanischer Verbindungsaufbauten nach einem der Ansprüche 1 bis 17, gegebenenfalls über ein Verankerungssystem, durch Verankerung befestigt sind.

## Claims

1. Assembly for mechanical connection, notably by hooking in a substantially vertical plane, of a plate, notably of a glazing element (1, 4, 18, 19, 40, 41, 42) to a supporting structure, said connection allowing a bending movement of controlled amplitude of said plate by means of an articulated fixing system comprising:
- at least one element (6, 20, 43, 53) defining a receiving cavity (9, 24) provided with a rounded zone,
- a carrying element comprising a rod (11, 31, 45) capable of being connected to the supporting structure, said rod terminating at one of its ends in a widened head (10, 25, 46) comprising a globally rounded lateral surface, the head being adapted to be seated in the cavity, characterized in that a play is provided between the widened head and its receiving cavity, allowing the tilting of the plate about its bearing point (P) on said system by pendular movement and with little friction between the mechanical parts of the system.

2. Mechanical connection assembly according to claim 1, characterized in that the plate is a monolithic (4), laminated (40, 41, 42) or multiple pane of the double glazing type (18, 19).

3. Mechanical connection assembly according to claim 1, characterized in that the radius of curvature of the rounded lateral surface of the head (10, 25, 46) is smaller than that of the rounded zone of the receiving cavity (9, 24).

4. Mechanical connection assembly according to claim 3, characterized in that the articulated fixing system comprises at least one clamping/blocking element (13, 30, 49) intended for keeping the head (10, 25, 46) in its receiving cavity (9, 24).

5. Mechanical connection assembly according claim 4, characterized in that the receiving cavity (9, 24) is a cavity of revolution, notably is cylindrical, and in that the widened head (10, 25, 46) has a flattened front face, notably truncated front face, and a substantially convex lateral surface of revolution.

6. Mechanical connection assembly according to one of claims 4 or 5, characterized in that at least one compressible and/or flexible material, notably in the form of a seal (12, 26, 47) is interposed between the base of the receiving cavity (9, 24) and the front face of the head (10, 25, 46) of the rod element.

7. Mechanical connection assembly according to one of claims 4, 5 or 6, characterized in that at least one compressible and/or flexible material is interposed between the clamping element (13, 30, 49) and the rear face of the head (10, 25, 46) of the rod element, this material notably being in the form of a washer (14, 27, 48) slid around said rod (11, 31, 45).

8. Mechanical connection assembly according to one of claims 6 or 7, characterized in that at least one of the compressible and/or flexible materials is an elastomeric material, notably having a Shore hardness degree of between 30 and 80, preferably from 40 to 60, or a metal material of the spring-washer type, such as Belleville washers.

9. Mechanical connection assembly according to one of claims 4 to 8, characterized in that the head (10, 25, 46) of the element provided with a rod (11, 31, 45) has a lateral surface of revolution comprising two conical portions on either side of a plane annular portion, in which plane portion is situated the bearing point (P) of the plate after it has been fixed to the supporting structure.

10. Mechanical connection assembly according to one of claims 4 to 9, characterized in that the element defining the receiving cavity (9, 24) is a hollow screw (6, 20) passing through all or a part of the plate, notably a screw having a bevelled head, and the cavity of which may be lined with a facing of a material having a mechanical resistance greater than that of the body of said screw.

11. Mechanical connection assembly according to one of claims 4 to 10, characterized in that the receiving cavity is defined by more than one element, and notably by a hollow screw (43) defining the base of the cavity, into which is fitted, notably by screwing, another component (53) which defines the lateral walls of said cavity.

12. Mechanical connection assembly according to one of claims 4 to 11, characterized in that the clamping element is a hollow screw portion (13, 30, 49) held in position by a nut (15, 28, 50) or lock-nut and disposed around the rod (11, 31, 45), its internal profile, notably diverging, being designed so as to allow a certain angular deflection of the rod in said screw portion.

13. Mechanical connection assembly according to one of the preceding claims, characterized in that the plate is a monolithic pane (4), and in that it comprises a hollow screw (6) defining a receiving cavity (9) and placed in a countersunk hole (5) formed in the pane (4) with the optional interposition of a ring seal (8), in such a way as to be flush with one of the faces (7) of the pane (4), a rod element (11), of which the head (10) is engaged into the cavity (9) and held in place by a threaded clamping component (13), seals (12, 14) of compressible material placed in the cavity (9) allowing tilting of the head (10) in its cavity (9) about the bearing point (P) of the pane (4), and a lock-nut (15) which is screwed onto the screw (6) and the clamping component (13) against the other face (16) of the pane (4), with the optional interposition of a compressible seal (17) between glass (4) and lock-nut (15).

14. Mechanical connection assembly according to one of claims 1 to 12, characterized in that the plate is a double glazing unit (18, 19) which, for the purpose of fixing it to the supporting structure, is perforated with successive circular holes on each of its sheets, these holes being sealed, notably by means of a metal sealing ring associated with a seal of elastomer of the silicone type (21, 22).

15. Mechanical connection assembly according to claim 14, characterized in that it comprises:
- a hollow screw (20) which passes through the pane (18, 19) and is flush with the surface of the outer sheet (19) by a countersunk hole, possibly with the interposition of a ring seal (23),
- a nut (28), optionally equipped with at least one seal (29), which fixes said screw (20) to the outer sheet (19) of the double glazing,
- a receiving cavity (24) in the screw (20),
- a rod element (31), of which the head (25) is seated in the cavity (24),
- a hollow screw portion (30) having a diverging internal profile which is placed around the rod (31) to hold the head (25) in the cavity (24) by screwing onto the nut (28),
- compressible seals (26, 27) in the cavity (24) for allowing tilting of the head (25) in the cavity (24) about the bearing point (P) of the pane (18, 19),
- an outer lock-nut (35) on the side of the internal sheet (18), which assures tightening of the assembly by screwing up of the lock-nut onto the hollow screw portion (30), notably by bearing against the sealing ring (21, 22).

16. Mechanical connection assembly according to claim 15, characterized in that two eccentric circular rings (32, 33) are disposed in the hole formed in the internal sheet (18) of the double glazing (18, 19), in contact with the nut (28), which thus supports the internal sheet (18) by means of them.

17. Mechanical connection assembly according to one of claims 1 to 12, characterized in that the plate is a laminated pane (40, 41, 42) and in that it comprises a hollow screw (43), optionally provided with a ring seal (44), into which an also hollow component (53) fits, the association of these two components defining the receiving cavity, the hollow screw passing only through the internal plate (40) of the pane, a rod element (45), the head (46) of which is engaged into the receiving cavity and is held in place by a threaded clamping piece (49), seals of compressible materials (47, 48), placed in the cavity and following the tilting of the head (46) in the cavity about the bearing point (P) of the pane, and a lock-nut which is screwed onto the threaded hollow component (53) and onto the clamping piece (49) against the face (52) of the internal plate (40) of the pane with the optional insertion of a flexible seal (51).

18. Use of the mechanical connection assembly according to one of the preceding claims for forming facades or outer walls of buildings of large area of panes of the V.E.A. or structural glazing type.

19. Pane provided with a least one mechanical connection assembly, intended for fixing it to a supporting structure according to any one of claims 1 to 17.

20. Assembly of panes disposed edge-to-edge for defining the surface of an outer wall, in which the panes are fixed by hooking to a supporting structure by means of the mechanical connections according to one of claims 1 to 17, optionally with the intermediary of a bracing system.
